# FASCICULE DE BREVET EUROPEEN

(11) **EP 1 047 478 B1**
(45) Date de publication et mention de la délivrance du brevet: **17.09.2003**
(21) Numéro de dépôt: 98951549.9
(22) Date de dépôt: 26.10.1998
(51) Int. Cl.: A62D 3/00

(54) **PROCEDE DE TRAITEMENT DES REFUS D'INCINERATION D'ORDURES MENAGERES**
VERFAHREN ZUR BEHANDLUNG VON MÜLLVERBRENNUNGSRÜCKSTÄNDEN
METHOD FOR TREATING HOUSEHOLD REFUSE INCINERATOR ASH

(30) Priorité: 24.10.1997 FR 9713597
(43) Date de publication de la demande: 02.11.2000
(73) Titulaire: Recupyl S.A., 38420 Domène (FR)
(72) Inventeur: TEDJAR, Farouk, F-38000 Grenoble (FR)
(74) Mandataire: Hecke, G.
(86) Numéro de dépôt international: FR9802282
(87) Numéro de publication internationale: WO99021619

(56) Documents cités:
- EP-A- 0 687 483
- BE-A- 1 000 323
- DE-A- 3 800 616
- DE-A- 4 135 368

## Description

L'incinération d'ordures ménagères produit les résidus suivants:
- mâchefers
- cendres volantes
- produits de réactions.

Les cendres volantes ou REFIOM représentent 3 à 5 % des déchets incinérés. Ce déchet est un matériau minéral très fin dont la composition de base repose sur le ternaire SiO₂-Al₂O₃ -CaO et qui renferme des sels alcalins, des métaux lourds ainsi que des traces de produits organiques (notamment de la Dioxine et des dérivés furaniques ou polychlorés).

La principale destination de ces produits toxiques reste la mise en décharge de classe 1 avec ou sans traitement préalable.

Depuis mars 1995, les résidus issus du traitement des fumées d'incinération d'ordures ménagères ou de déchets industriels doivent être préalablement stabilisés avant admission en centre d'enfouissement technique.

En outre d'ici 2002, une loi cadre prévoit que seuls les déchets réputés et reconnus ultimes pourront être admis en C.E.T.

A l'heure actuelle, les techniques mises en oeuvre pour traiter ce type de déchets opèrent selon deux grandes familles:
- Les procédés dit "à froid" basés principalement sur les techniques d'enrobage ou d'encapsulage,
- Les procédés dit " à chaud" basés principalement sur des techniques thermiques

### Traitement par enrobage:

Dans les procédés " à froid" les liants minéraux utilisés sont choisis parmi la combinaison silice-alumine, les ciments et les laitiers. Dans les procédés de stabilisation par des liants organiques les déchets sont enrobés dans du bitume, du goudron ou des matières plastiques après fusion de la matrice d'accueil.

Les liants envisagés sont des liants hydrauliques classiques comme les ciments et la chaux, les composés pouzzolaniques et les laitiers, les argiles naturelles ainsi que des composés zéolithiques

Le principal procédé consiste en l'utilisation de liant hydraulique type ciment Portland pour enrober le REFIOM. Malheureusement la présence de sels de métaux de transition peut retarder la prise du ciment et même l'inhiber pour de fortes concentrations et en présence de composés organiques.

En outre, cette technique conduit à l'augmentation importante de la masse de déchets.

Ainsi EP 0669145A1 propose une technique d'enrobage de poussières toxiques selon laquelle la fraction de ciment varie entre 50 et 55% en poids. Les installations françaises d'incinération produisent entre 300 et 400.000 Tonnes de REFIOM par an. L'inertage par liant hydraulique conduirait donc à la production d'un volume de déchets équivalent à près de 800.000 Tonnes.

L'utilisation de liants organiques a également été envisagée. Ces procédés sont décrits en particulier dans WO 8704017 et WO 9210439. Les liants organiques présentent l'inconvénient majeur d'être instables à la chaleur et de se dégrader en présence d'oxydants.

### Traitement par voie thermique directe:

Les différents procédés de stabilisation à chaud sont basés sur le four à arc, la torche à plasma d'arc, les micro-ondes et un brûleur à gaz classique associé à un arc électrique.

Ce sont principalement des procédés à caractère thermique qui évoluent à températures élevées et provoquent donc la libération d'éléments polluants par vaporisation ou décomposition. L'inertage par traitement thermique direct du déchet s'accompagne d'émission de chlore, d'oxydes de soufre ou de métaux lourds volatils comme le mercure et le cadmium. Ainsi EP 0485041 décrit un procédé de vitrification qui s'accompagne d'émission d'acide chlorhydrique qui est neutralisé et de métaux qui sont séparés et mis en décharge.

Par ailleurs, la vitrification par torche à plasma se heurte au problème du bon contact entre le plasma et le déchet.

En outre l'élimination incomplète de métaux lourds conduit à des modifications des composés vitreux avec un possible relargage de polluants ce qui pose le problème de pérennité des matrices ultimes plus ou moins stabilisées.

Le procédé décrit dans Dl consiste à mettre tout le solide en solution notamment au moyen de HCl.

Cela conduit à traiter des volumes très importants notamment pour les REFIOM et de dissoudre des composés non problématiques pour l'environnement comme le calcium, le sodium, le magnésium, la silice.

Ensuite l'extraction liquide - liquide concerne les métaux. Il y a donc une manipulation de très gros volumes pour atteindre les polluants (souvent sous forme de traces). Ce procédé s'accompagne de la nécessité de rejets importants de sels (chlorures) qui, même dépollués, sont souvent nuisibles pour le milieu aquatique naturel.

Pour remédier à cet inconvénient il y a lieu de procéder à des dissolutions dites sélectives comme nous le mettons en oeuvre dans la présente invention.

L'objet de la présente invention consiste à proposer une solution pour pallier aux inconvénients précédents.

Le procédé est basé sur les principes qu'il faudra intégrer dans toute démarche de traitement de déchets. Il s'agit d'opérer selon un procédé qui permet :
- de récupérer la fraction métallique et saline sous forme de composés ayant une valeur marchande sur le marché du négoce des produits du recyclage,
- De réduire les volumes de déchets,
- de rendre la fraction minérale non toxique et potentiellement réutilisable,
- d'opérer selon un procédé économiquement viable et sans transfert de pollution.

Ce but est atteint par un procédé d'incinération d'ordures ménagères et de refus d'incinération de déchets industriels (REFION) et (REFIDI) selon les revendications annexées.

Le procédé proposé consiste à associer un traitement hydrométallurgique à une phase d'inertage par une technique largement répandue dans l'industrie du verre.

Dans sa composante hydrométallurgique, le procédé repose sur une technologie déjà brevetée par la Société RECUPYL (Brevet Européen 95944). Les étapes chimiques sont aisément applicables à ce type de matrice renfermant 3 à 4 % de métaux lourds.

Le procédé est avantageusement appliqué aux résidus d'incinération d'ordures ménagère ainsi qu'aux boues de neutralisation d'industries chimiques (traitement de surfaces).

Selon une caractéristique de l'invention le procédé de traitement de déchets solides chargés de métaux lourds principalement du zinc comprend les étapes suivantes :
- lessivage aqueux des chlorures d'alcalins et d'alcalino-terreux
- traitement et valorisation des sels lessivés,
- lixiviation sélective des métaux lourds,
- dépollution électrochimique de l'effluent liquide,
- vitrification de la phase solide débarrassée de ces éléments toxiques.

Notre composante thermique s'appuie sur le procédé de fusion par induction en spire directe qui relève des techniques d'autocreuset. Dans ces techniques le matériau est contenu dans une paroi métallique refroidie par une circulation d'eau interne. L'énergie nécessaire à la fusion est injectée dans le matériau soit en surface soit directement dans le volume. Le matériau porté à l'état liquide vient au contact avec la paroi maintenue froide le long de laquelle il se solidifie. Une croûte solide périphérique se forme ainsi, si bien que le liquide se trouve contenu dans un creuset effectif constitué par le matériau lui-même à l'état solide. L'autocreuset ainsi formé élimine tout risque de réaction avec la paroi, ce qui évite à la fois la corrosion de la paroi par le matériau fondu et la pollution de ce matériau à partir de la paroi. En outre dans le cas de matériaux isolants électriques à l'état solide, l'autocreuset constitue une isolation thermique naturelle qui limite les pertes thermiques à la paroi.

La spire directe s'adresse aux matériaux du type verres ou oxydes, isolants électriques à l'état solide et conducteurs à l'état liquide. La paroi du creuset est une virole métallique fendue le long d'une génératrice et refroidie par circulation d'eau. Aux bords de la fente une différence de potentiel est appliquée qui transforme la paroi en inducteur. Le champ magnétique créé par cet inducteur induit des courants dans le matériau placé dans le creuset et assure la fusion et la formation de l'autocreuset.

La fréquence du courant dans la paroi constituant l'inducteur monospire est choisie de telle façon que l'épaisseur de peau électromagnétique dans le matériau fondu soit de l'ordre du rayon de la spire. L'énergie est ainsi injectée dans toute la masse du produit assurant un très bon rendement.

Les avantages de la spire directe comparés aux divers procédés thermiques utilisables pour la fusion des verres et des oxydes sont principalement les suivants
- Un rendement élevé : le rendement du transfert énergétique entre la spire et le produit fondu est voisin de 98 % Le rendement global du procédé depuis le réseau de distribution électrique jusqu'au produit fondu est de l'ordre de 75 %.
- Une faible surchauffe, liée à l'existence d'une interface liquide-solide et à une distribution d'énergie dans toute la masse Ceci évite toute évaporation du produit pouvant résulter de surchauffe locale
- Une injection d'énergie par induction, c'est-à-dire sans véhicule matériel d'énergie, à la différence des procédés à flamme ou à plasma.

Ceci élimine en particulier tout risque de convection par les gaz, nécessaires à l'entretien des flammes ou du plasma, des éléments de base du produit à fondre.
- Une taille non limitée de la spire qui conserve la même efficacité et la même distribution en volume de l'énergie quel que soit le rayon. Des valeurs typiques de spires sont:
   ◇ diamètre 600 mm, puissance 100 kW fréquence 100 khz
   ◇ diamètre 2000 mm, puissance 500 kW, fréquence 10 khz
- Une productivité élevée dans la gamme 50 kg/h pour une spire de 600 mm ; 500 kg/h pour une spire de 2000 mm.
- Un brassage du matériau fondu qui permet une digestion rapide des produits d'alimentation et évite leur dispersion par thermo-convection dans l'air lorsque ceux-ci sont fibreux ou pulvérulents et fins.

L'invention est caractérisée par le fait qu'elle permet une transformation chimique, minéralogique et thermochimique.

Le procédé comprend un traitement chimique, une séparation de phase solide-liquide suivie d'un traitement approprié de la phase liquide, et un traitement thermique qui conduit à des transformations thermochimiques permettant de disposer d'un produit vitrifié inerte.

Le traitement hydraulique et le traitement chimique conduisent à la formation d'un solide dépollué et communément appelé « gâteau de filtration » quand la séparation solide liquide est menée au moyen d'une filtration.

Avant tout traitement ultérieur ce solide appelé « gâteau » est lavé puis réservé pour les étapes ultérieures. Les eaux de lavage sont purifiées comme décrit dans les exemples ci-après.

Le procédé permet également d'éviter la formation de Dioxine ou de dérivés furaniques dont la formation est catalysée à moyenne température par certains métaux lourds.

Une autre caractéristique du procédé réside dans le fait qu'il est possible d'associer à la charge d'amiante une charge de déchets industriels.

En particulier, les refus d'incinération des déchets industriels (REFIDI), les boues d'hydroxydes chargées de métaux lourds ainsi que les résidus des procédés hydrométallurgiques comme l'élaboration électrochimique des dioxydes de manganèse et du zinc qui selon les procédés de purification des liqueurs conduisent à des déchets comme les oxy-hydroxydes de fer simples (hématite, goethite, maghémite) ou mixtes (jarosites, ou spinelles bimétalliques).

Les caractéristiques du procédé résident dans :
- la réduction du volume de déchets à placer en C.E.T
- la séparation des métaux lourds pour éviter tout risque de relargage par lixiviation,
- l'obtention de produits potentiellement valorisables
- un traitement thermochimique permettant d'abaisser la température de fusion de la charge.

Les exemples suivants permettent de comprendre le procédé sans en être une représentation exclusive.

### Exemple 1:

Une charge de 1 kg est attritionée pendant 15 mn. Le rapport solide/liquide est de 1. La pulpe obtenue est diluée dans un rapport de 2 avec de l'eau puis agitée pendant 30 mn.

La solution obtenue est alors filtrée.

Les eaux mères ont les caractéristiques suivantes:

| pH | Conductivité | Chlorures | Pb | Zn | Cd |
|---|---|---|---|---|---|
| 8,75 | 182 mS | 49 g | 1,9 mg | 0,2 mg | 0,5 mg |

Le gâteau de filtration est rincé deux fois. Les caractéristiques des eaux de lavage sont reportées sur les tableaux suivants:

| *premier lavage:* | | | | | |
|---|---|---|---|---|---|
| pH | Conductivité | Chlorures | Pb | Zn | Cd |
| 7,02 | 144 mS | 2,9 g | 1,05 mg | 0,06 mg | 0,05 mg |

| *second lavage:* | | | | | |
|---|---|---|---|---|---|
| pH | Conductivité | Chlorures | Pb | Zn | Cd |
| 7,7 | 14 | 0,88g | - | 0,03 mg | 0,005 mg |

On constate qu'au bout du second lavage la conductivité baisse considérablement, indiquant ainsi la faible minéralisation de l'eau du second lavage. Les quantités des métaux majoritaires sont très nettement inférieures aux normes admises.

Le gâteau lavé est alors soumis à une lixiviation alcaline dans une solution de soude à 9,5 M/I à 80°C pendant 2 heures. Le rapport solide /liquide est de 3.

Après cette lixiviation la solution contient 2,3 g/l de zinc, 0,65 g/l de plomb. Au bout de 2h de lixiviation, on ajoute 100 ml d'eau oxygénée à 35 % et on maintient la température à 80°C pendant 1 h. Ce traitement n'a pas d'effet sur la concentration en zinc mais conduit à une augmentation de l'extraction du plomb dont la concentration passe à 0,9 g/l. Il permet également d'oxyder les composés organiques adsorbés sur la phase alumino-siliceuse.

La solution est alors purifiée au moyen de poudre de zinc (0,3 g par litre de solution à purifier) à 60°C. Au bout de 30 mn la concentration chute à 8,4 mg/l.

La solution obtenue est alors traitée par la chaux pour éliminer les silicates solubilisés puis à l'aide de carbonate d'ammonium.

Cette réaction permet de précipiter le zinc sous forme de carbonate basique. Elle s'accompagne de libération d'ammoniac qui est fixée dans une solution saturée en acide carbonique pour régénérer le carbonate d'ammonium.

### Exemple 2:

L'examen granulométrique d'une charge de REFIOM obtenue à partir d'un procédé semi-humide montre que 30 % de la charge a une granulométrie supérieure à 120 microns et 70 % de la charge a une granulométrie inférieure à 120 microns.

L'analyse des deux fractions montre une répartition inégale des différents éléments.

Les quantités totales du zinc, le nickel et le cadmium se trouvent à70% dans les fines et 30% dans les grosses. Par contre la répartition du plomb s'inverse puisque 28 % seulement sont présent dans les fines et le reste soit 72% sont piégés dans les grosses.

Les chlorures se répartissent à peu près uniformément entre les deux fractions avec un léger avantage pour la fraction fine (58% contre 42 pour les grosses). L'attaque à l'acide chlorhydrique montre que la fraction des insolubles (c'est à dire principalement la silice) se trouve majoritairemenr dans les fines ( 82,5 % contre seulement 17,5 % dans les grosses).

La poussière brute est soumise à une opération d'attrition à l'eau dans un rapport de 1:2. Après attrition la charge est acheminée en gravitaire vers une cuve de dilution. Le rapport de dilution est de 4. La dilution et l'attrition sont effectuées au moyen d'une solution d'acide borique à 55 g/l. L'acidification de la solution permet d'accroître le taux d'extraction de certains éléments et en particulier les anions comme les sulfates.

En sortie de dilution la pulpe obtenue est envoyée vers un cyclone pour classifier la charge en deux lots (sup, et inf. à 120 microns). La sur-verse et la sous verse sont toutes deux décantées dans un décanteur vertical qui permet de séparer les phases solide/liquide.

Les deux charges solides sont soumises séparément à une lixiviation alcaline dans les mêmes conditions que pour l'exemple 1.

Après lixiviation, la séparation solide/liquide est effectuée.

La fraction liquide est envoyée vers l'étape de purification qui est conduite dans les mêmes conditions que pour l'exemple 1, alors que la boue est lavée au moyen de soude pour éliminer les métaux contaminants. Elle est alors acheminée vers le traitement thermique sans rinçage de la soude résiduelle qui va jouer un rôle important durant la phase de traitement thermique.

La solution issue de la lixiviation basique et de l'étape de purification est soumis à une électrolyse pour récupérer le zinc et renvoyer la solution déprimée en tête de procédé pour servir à une nouvelle attaque. Cette électrolyse peut être menée dans des électrolyseurs largement disponibles dans le commerce et conduit à la formation de poudre de zinc. Mais la poudre de zinc obtenue est gorgée de soude. Elle exige un lavage poussé impliquant une grande quantité d'eau de lavage. En outre la poudre obtenue est très réactive (parfois pyrophorique ) et nécessite une passivation. L'agent passivant le plus efficace est le chromate qui pose le problème d'introduction de chrome VI dans le procédé.

Dans cet exemple l'électrolyse à été menée dans une cellule à deux compartiments munie d'une cathode en titane et d'une anode en titane recouvert d'un oxyde de ruthénium. Après appauvrissement de la solution, celle-ci est renvoyée dans le procédé pour servir à la lixiviation alors que les cathodes sont régénérées dans un électrolyseur dit de régénération. L'électrolyse est conduite dans une solution de sulfate de sodium à 0,5 M/l. Le zinc récupéré à la cathode présente une meilleure valeur marchande et une meilleure sécurité de manipulations.

### Description de l'installation de traitement selon le procédé:

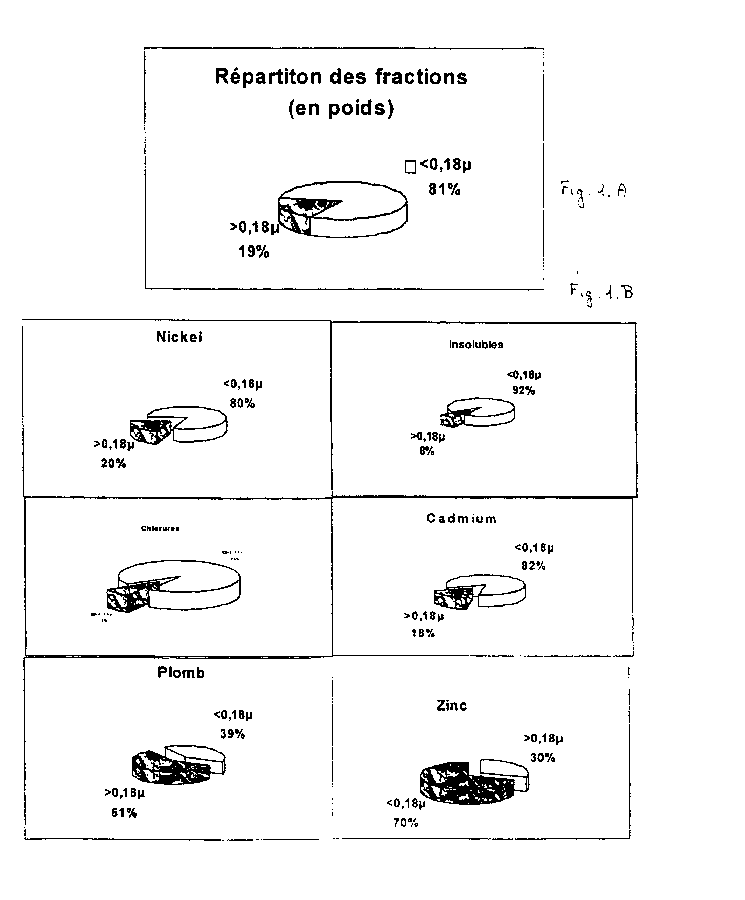

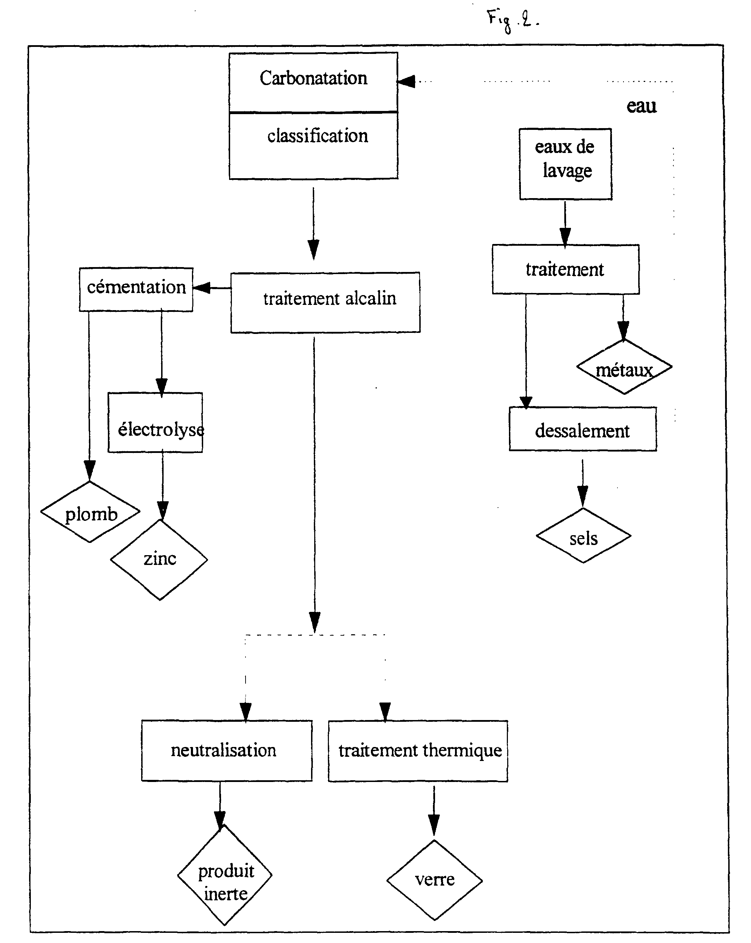

Une installation de traitement de refus d'incinération d'ordures ménagères et de refus d'incinération de déchets industriels selon l'invention est schématisée dans ces différentes étapes sur la figure 2.

Etapes 1: La poussière stockée dans un silo est acheminée via une vis sans fin dans une cellule d'attrition munie d'une arrivée d'eau provenant de la cuve de préparation de la solution d'acide borique et fonctionnant à température ambiante. Après attrition, la pulpe est évacuée vers une cuve munie d'une arrivée d'eau et où la densité de la pulpe est abaissée par dilution. La charge est alors envoyée sous pression vers un hydrocyclone la sous-versé, recueillie à la pointe du cyclone et la sur verse sont dirigées vers deux décanteurs. Le clair est réservé pour le traitement des sels et la fraction solide est dirigée vers un réacteur agité et chauffé et contenant la solution de soude. Au terme de la réaction de lixiviation basique, la pulpe est dirigée vers un filtre presse. Après filtration 13, le clair est envoyé vers un second réacteur 16 où il subit un traitement de purification par addition de poudre de zinc 17 pour cémenter les métaux plus électropositifs que le zinc. En particulier le mercure, le cadmium et le cuivre sont séparés dans un filtre à poché 18. La solution est encore purifiée dans 20 au moyen d'ajout de chaux 21. La pukpe est décantée dans 22. Le clair est envoyé vers le traitement électrochimique 24 alors que le solide 25 est utilisé comme ajout durant le traitement thermique.

Au terme de ce traitement la solution est envoyée vers l'étape d'électrolyse.

Les eaux de lavage sont traitées selon les procédés repris sur la figuré 3/6 qui comprend une tépe de purification apr élimination des métaux lourds dans 29. Cette opération est effectuée au moyen de dérivés soufrés (polysulfure de cacium ou trimercaptotriazine. Le précipité est filtré en 30 et le clair est envoyé vers un disposition d'évaporation 31. Un autre moyen avantageux est décrit sur la figure 3B. Il consiste en un traitement sur résines sélectivesde métaux lourds 35 suivi d'un concentration sur osmose inverse 37. Cette voie conduit à la régénération d'eau propre en 38 et de production d'une saumure exempte de métaux lourds 39.

La boue récupérée en 15 est essorée puis analysée en continu. Le rapport Ca/Si est déterminé. Il est alors ajusté par addition de chaux ou de silicate de soude puis envoyée vers le dispositif de vitrification.

Ce dispositif comprend le système d'alimentation 42 qui envoie la charge en continu sur une spire 44 refroidie à l'eau et alimentée par un générateur 46. La spire est surmontée d'une hotte d'aspiration 41, et d'un dispositif de lavage des gaz 40.

Le dispositif de vitrification est un dispositif de fusion par induction en spire directe, largement utilisé chez les verriers. Le dispositif est constitué d'une spire refroidie généralement en cuivre ou en aluminium. La spire 44 est connectée électriquement à un coffret d'adaptation d'impédance 45 constitué de capacités, lui même relié électriquement au générateur de puissance 46 qui est connecté sur le réseau électrique.

Les boues introduites, après la phase de démarrage, dans la spire sont ingérées rapidement dans le bain liquide grâce au brassage évitant aussi tout risque de dispersion par envol.

La phase de démarrage nécessite l'utilisation de suscepteurs car les produits à froid ne sont pas conducteurs de l'électricité. Les suscepteurs, généralement du graphite ou tout autre matériau conducteur à très haut point de fusion sont placés sur un lit de produit à fondre afin de former une boucle puis recouverts du même produit. La circulation de courant alternatif dans la spire crée un champ magnétique qui induit des courants de Foucault dans les suscepteurs qui par l'effet Joule s'échauffent. Le produit au contact des succepteurs s'échauffe et fond. Le matériau fondu devient conducteur de l'électricité, et permet par couplage magnétique et par conduction thermique, la fusion progressive de l'ensemble du produit dans la spire.

Après fusion complète du produit on retire les suscepteurs et il est alors possible d'alimenter en continu la spire. Le produit fondu est récupéré en continu soit par débordement soit par l'intermédiaire d'une busette placée dans le fond de la spire. Dans le cas du débordement, un barrage en matériau réfractaire empêche le produit non fondu de s'écouler avec le produit fondu.

## Revendications

1. Procédé de traitement de refus d'incinération d'ordures ménagères et de refus d'incinération de déchets industriels (REFIOM et REFIDI), **caractérisé en ce qu'**il comprend les étapes successives suivantes:
- une étape de traitement hydraulique comprenant une opération d'attrition associée à une dilution,
- une étape de traitement chimique comprenant une opération de lixiviation alcaline,
- une étape de traitement thermique permettant une opération de vitrification.

2. Procédé de traitement selon la revendication 1, **caractérisé en ce qu'**au cours de l'étape de traitement hydraulique, la dilution est suivie d'une classification hydraulique en deux fractions de granulométrie inférieure et supérieure à 120 microns.

3. Procédé de traitement selon l'une des revendications 1 et 2, **caractérisé en ce que** l'étape de traitement hydraulique est effectuée en présence d'une solution d'acide borique de concentration inférieure ou égale à 55 g/l.

4. Procédé de traitement selon l'une quelconque des revendications 1 à 3, **caractérisé en ce que** l'étape de traitement chimique est suivie :
- d'une filtration permettant d'obtenir un gâteau de filtration,
- d'un lavage du gâteau de filtration,
- d'une purification des eaux de lavage issues du lavage du gâteau de filtration, au moyen de polysulfure de calcium ou de trimercaptotriazine pour éliminer les métaux lourds contenus dans les eaux de lavage.
- d'une concentration de la solution issue de la purification des eaux de lavage par osmose inverse pour obtenir une saumure.

5. Procédé de traitement selon l'une quelconque des revendications 1 à 4, **caractérisé en ce que** l'opération de lixiviation alcaline est réalisée avec une solution de soude de concentration égale à 9,5M/l additionnée ou non d'eau oxygénée et à une température de traitement de 80°C et elle est suivie d'une étape de purification de la solution de soude au moyen d'une poudre de zinc puis de chaux.

6. Procédé de traitement selon la revendication 5, **caractérisé en ce que** le zinc est récupéré :
- soit par précipitation de carbonate basique au moyen de carbonate d'ammonium,
- soit par électrolyse de déplétion du zinc dans une cellule à deux compartiments,
- soit par électrolyse de régénération du zinc dans une solution de sulfate de sodium à 0,5 M/l.

7. Procédé de traitement selon l'une quelconque des revendications 1 à 6, **caractérisé en ce que** le traitement thermique est effectué dans un système à induction en autocreuset.

8. Procédé de traitement selon l'une quelconque des revendications 1 à 7, **caractérisé en ce que** le traitement chimique conduit à un produit n'ayant plus de sels ou métaux solubles.

## Patentansprüche

1. Verfahren zur Behandlung von Haus- und Industriemüllverbrennungsrückständen (französisch: REFIOM und REFIDI), **dadurch gekennzeichnet, dass** es folgende aufeinanderfolgende Schritte umfasst:
- einen hydraulischen Bearbeitungsschritt, de r einen mit einer Verdünnung verbundenen Abreibungsschritt umfasst,
- einen chemischen Behandlungsschritt, der einen Schritt der alkalischen Entlaugung umfasst,
- einen Wärmebehandlungsschritt, der einen Verglasungsschritt ermöglicht.

2. Behandlungsverfahren nach Anspruch 1, **dadurch gekennzeichnet, dass** während des hydraulischen Behandlungsschritts auf die Verdünnung eine hydraulische Klassifizierung in zwei granulometrische Fraktionen, und zwar eine unter und eine über 120 Micron, erfolgt.

3. Behandlungsverfahren nach einem der Ansprüche 1 und 2, dadurch gekenn zeichnet, dass der hydraulische Behandlungsschritt unter Vorhandensein einer Borsäurelösung mit einer Konzentration von unter oder gleich 55 g/l erfolgt.

4. Behandlungsverfahren nach einem der Ansprüche 1 bis 3, dadurch gekenn zeichnet, dass auf den chemischen Behandlungsschritt folgen:
- eine Filtrierung, durch die man einen Filterkuchen erhält,
- ein Waschen des Filterkuchens,
- eine Klärung des Waschwassers, das durch das Waschen des Filterkuchens entstanden ist, mittels Kalziumpolysulfid oder Trimercaptotriazin zum Entziehen der Schwermetalle, die in dem Waschwasser enthalten sind,
- eine Konzentrierung der aus der Klärung des Waschwassers hervorgegangenen Lösung durch umgekehrte Osmose zum Erhalt einer Salzlösung.

5. Behandlungsverfahren nach einem der Ansprüche 1 bis 4, dadurch gekenn zeichnet, dass der Schritt der alkalischen Entlaugung mittels Natronlauge mit einer Konzentration gleich 9,5 M/l erfolgt, der Wasserstoffperoxid zugesetzt sein kann oder nicht, und zwar auf einer Temperatur von 80°C, worauf ein Schritt der Klärung der Natronlauge mittels eines Zinkpulvers und dann Kalk folgt.

6. Behandlungsverfahren nach Anspruch 5, dadurch gekenn zeichnet, dass das Zink folgendermaßen wiedergewonnen wird:
- entweder durch Fällung von basischem Karbonat mittels Ammoniumhydrogenkarbonat,
- oder durch Zinkreduktionselektrolyse in einer Zelle mit zwei Räumen,
- oder durch Zinkaufbereitungselektrolyse in einer Natriumsulfatlösung mit 0,5 M/l.

7. Behandlungsverfahren nach einem der Ansprüche 1 bis 6, dadurch gekenn zeichnet, dass die Wärmebehandlung in einem Schalenschmelz-lnduktionssystem vorgenommen wird.

8. Behandlungsverfahren nach einem der Ansprüche 1 bis 7, dadurch gekenn zeichnet, dass die chemische Behandlung zu einem Produkt führt, das keine löslichen Salze oder Metalle mehr enthält.

## Claims

1. A treatment process for household refuse incinerator ash and industrial refuse incinerator ash, **characterized in that** it comprises the following successive steps:
- a hydraulic treatment step comprising an attrition operation associated with a dilution,
- a chemical treatment step comprising an alkaline leaching operation,
- a thermal treatment step enabling a vitrification operation.

2. The treatment process according to claim 1, **characterized in that**, during the hydraulic treatment step, dilution is followed by a hydraulic classification into two fractions of granulometry smaller than and larger than 120 microns.

3. The treatment process according to one of the claims 1 and 2, **characterized in that** the hydraulic treatment step is performed in the presence of a boric acid solution with a concentration lower than or equal to 55 g/l.

4. The treatment process according to any one of the claims 1 to 3, **characterized in that** the chemical treatment step is followed:
- by filtering enabling a filter cake to be obtained,
- by washing of the filter cake,
- by purification of the washing waters coming from washing of the filter cake by means of calcium polysulphide or trimercaptotriazine to eliminate the heavy metals contained in the washing waters,
- a concentration of the solution coming from purification of the washing waters by reverse osmosis to obtain a brine.

5. The treatment process according to any one of the claims 1 to 4, **characterized in that** the alkaline leaching operation is performed with a soda solution with a concentration equal to 9.5 M/l, with addition of hydrogen peroxide or not, and at a temperature of 80°C, and that it is followed by a purification step of the soda solution by means of a zinc powder then lime.

6. The treatment process according to claim 5, **characterized in that** the zinc is recovered:
- either by precipitation of basic carbonate by means of ammonium carbonate,
- or by depletion electrolysis of the zinc in a two-compartment cell,
- or by regenerative electrolysis of the zinc in a sodium sulphate solution at 0.5 M/l.

7. The treatment process according to any one of the claims 1 to 6, **characterized in that** the thermal treatment is performed in an induction system in a self-crucible.

8. The treatment process according to any one of the claims 1 to 7, **characterized in that** the chemical treatment leads to a product no longer having any soluble salts or metals.
